# EUROPÄISCHE PATENTSCHRIFT

(11) **EP 1 425 127 B1**
(45) Veröffentlichungstag und Bekanntmachung des Hinweises auf die Patenterteilung: **02.08.2006**
(21) Anmeldenummer: 02764861.7
(22) Anmeldetag: 24.08.2002
(51) Int. Cl.: B23D 77/00, B23B 29/034

(54) **KOMBINATIONSWERKZEUG**
COMBINATION TOOL
OUTIL COMBINE

(30) Priorität: 11.09.2001 DE 10144759
(43) Veröffentlichungstag der Anmeldung: 09.06.2004
(73) Patentinhaber: KOMET GROUP Holding GmbH, 74354 Besigheim (DE)
(72) Erfinder: FEIL, Erich, 74382 Neckarwestheim (DE); MÜCKSCHEL, Karl-Heinz, 74369 Löchgau (DE)
(74) Vertreter: Wolf, Eckhard
(86) Internationale Anmeldenummer: PCT/EP2002/009472
(87) Internationale Veröffentlichungsnummer: WO 2003/035316

(56) Entgegenhaltungen:
- DE-C- 333 348
- DE-C- 921 125
- US-A- 1 407 560
- US-A- 6 033 159

## Beschreibung

Die Erfindung betrifft ein Kombinationswerkzeug für den Einsatz in Werkzeugmaschinen zur spangebenden Bearbeitung von Werkstücken mit einem Grundkörper, mit mehreren über den Umfang des Grundkörpers verteilt angeordneten, einen Anschnitt und einen Führungsteil aufweisenden Reibschneiden zum Reiben einer Bohrung, und mit mindestens einer axial gegenüber den Reibschneiden versetzt angeordneten radial gegenüber dem Grundkörper aussteuerbaren Einstechschneide.

Es ist ein Kombinationswerkzeug dieser Art bekannt, das eine große Zahl, beispielsweise zehn über den Umfang verteilt angeordnete Reibschneiden sowie eine über einen Schiebermechanismus radial aussteuerbare Einstechschneide aufweist. Die beim Einstechvorgang auftretenden Schnittkräfte werden dort über die in der Bohrung abgestützten Reibschneiden aufgenommen. Aufgrund der beim Aussteuern der Einstechplatten auftretenden Reaktionskräfte können sich die Reibschneiden in der Bohrungswand verhaken. Daraus resultiert eine Schwingungsgefahr, die zu Komplikationen beim Bearbeitungsvorgang führen kann.

Ausgehend hiervon liegt der Erfindung die Aufgabe zugrunde, das bekannte Kombinationswerkzeug der eingangs angegebenen Art dahingehend zu verbessem, dass die Schwingungsgefahr beim Einstechvorgang reduziert wird.

Zur Lösung dieser Aufgabe wird die im Anspruch 1 angegebene Merkmalskombination vorgeschlagen. Vorteilhafte Ausgestaltungen und Weiterbildungen ergeben sich aus den abhängigen Ansprüchen.

Die erfindungsgemäße Lösung geht von der Erkenntnis aus, dass die vorstehend aufgezeigten Probleme durch die Verwendung von Führungsleisten mit balliger Oberfläche zur Aufnahme der beim Einstechvorgang auftretenden Reaktionskräfte reduziert werden können. Um dies zu erreichen sind gemäß der Erfindung zwei Führungsleisten vorgesehen, die im Winkelabstand voneinander zwischen zwei in Umfangsrichtung benachbarten Reibschneiden im Grundkörper angeordnet und axial gegenüber diesen in Richtung Einstechschneide versetzt sind, die den gleichen Flugkreisradius wie die Reibschneiden aufweisen und die beim Einstechvorgang im Winkelabstand auf einander gegenüberliegenden Seiten der Schnittkraftresultierenden der mindestens einen Einstechschneide innerhalb der Bohrung abstützbar sind. Aufgrund des Axialversatzes wird bei der Bearbeitung einer Bohrung der Reibvorgang vorgeschaltet und erst nach dessen Beendigung der Einstechvorgang durchgeführt. Während des Einstechvorgangs kommt es aufgrund der erfindungsgemäßen Maßnahmen im Bereich der Reibschneiden weder zur Spanbildung noch zu einem Verhaken.

Eine weitere Verbesserung in dieser Hinsicht kann dadurch erzielt werden, dass mindestens eine weitere Führungsleiste vorgesehen ist, die nahe der Einstechschneide angeordnet sein kann und die im wesentlichen senkrecht zu deren Schnittkraftresultierenden innerhalb der Bohrung abstützbar ist.

Gemäß einer bevorzugten Ausgestaltung der Erfindung sind zwei einander im Grundkörper im wesentlichen diametral gegenüberliegende, gleichzeitig ansteuerbare Einstechschneiden vorgesehen, die eine während des Einstechvorgangs in Umfangsrichtung lagestabile gemeinsame Schnittkraftresultierende aufweisen. Eine der beiden Einstechschneiden kann dabei als Vorstech- oder Schruppschneide und die andere als Fertigstech- oder Schlichtschneide fungieren, wobei die Schruppschneide regelmäßig eine größere Schnittkraft als die Schlichtschneide aufweist. Eine solche Anordnung führt zu einer gemeinsamen Schnittkraftresultierenden, die betragsmäßig kleiner ist als bei nur einer Einstechschneide und dadurch eine Reduzierung der Abdrängwirkung herbeiführt.

Je mehr Reibschneiden vorhanden sind, desto weniger Platz bleibt für die Führungsleisten. Dies kann dazu führen, dass zwischen den Reibschneiden keine äquidistante Winkelteilung möglich ist. In diesem Fall kann durch einen angepaßten Axialversatz der Reibschneiden dafür gesorgt werden, dass es dennoch zu einer gleichmäßigen Schnittaufteilung an den Reibschneiden kommt. Die Phasenverschiebung der Einzelschneiden wird durch die Axialeinstellung kompensiert.

Im Folgenden wird die Erfindung anhand der Zeichnungen näher erläutert.

Es zeigen
- Fig. 1: einen Längsschnitt durch ein Kombinationswerkzeug mit Reibschneiden, einer Einstechschneide und Führungsleisten;
- Fig. 2a: eine Stirnseitenansicht des Kombinationswerkzeugs nach Fig. 1;
- Fig. 2b: zwei übereinandergelegte Ausschnitte nach den Schnittlinien B, B' der Fig. 2a in vergrößerter Darstellung;
- Fig. 3: einen ausschnittsweisen Längsschnitt eines abgewandelten Ausführungsbeispiels eines Kombinationswerkzeugs mit zwei radial aussteuerbaren Einstechschneiden;
- Fig. 4: einen Ausschnitt aus einer Schwingsattelbremse, deren Zylinderbohrung mit Einstich mit Hilfe eines Kombinationswerkzeugs nach Fig. 1 bis Fig. 3 hergestellt wurde.

Die in der Zeichnung dargestellten Kombinationswerkzeuge sind zum Ausreiben von Zylinderbohrungen 10 und zum Einbringen eines Einstichs 12 in die Zylinderbohrung bestimmt (Fig. 4). Bohrungen dieser Art kommen beispielsweise in der Fahrzeugtechnik bei Schwimmsattelbremsen vor. Die Zylinderbohrung 10 ist dort zur Aufnahme eines Kolbens 14 bestimmt, während der Einstich 12 zur Aufnahme eines Gummidichtrings 15 bestimmt ist, der den Ringraum zwischen Zylinderbohrung und Kolben druckdicht überbrückt. In der oberen Hälfte der Fig. 4 ist der Kolben 14 im Ruhezustand und in der unteren Hälfte im Bremszustand dargestellt.

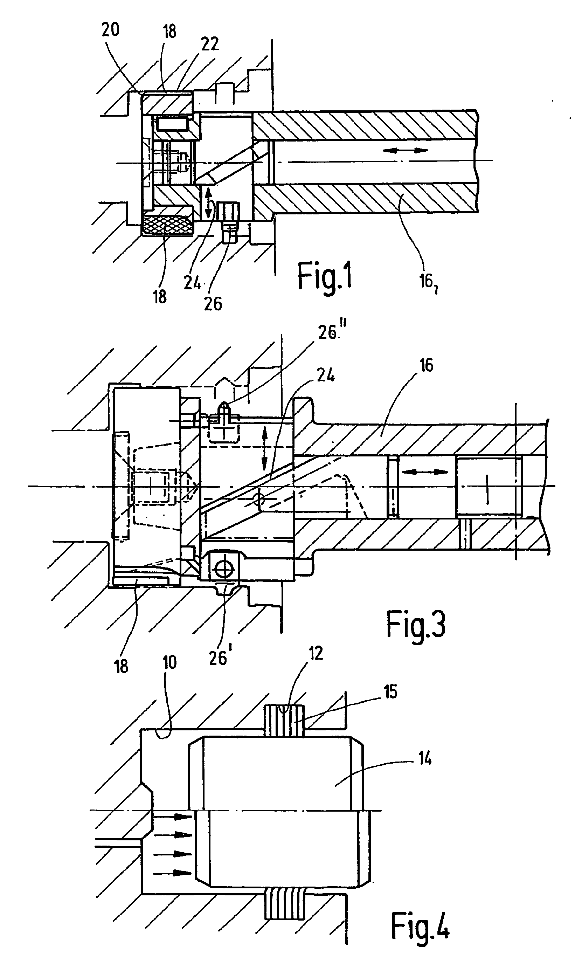

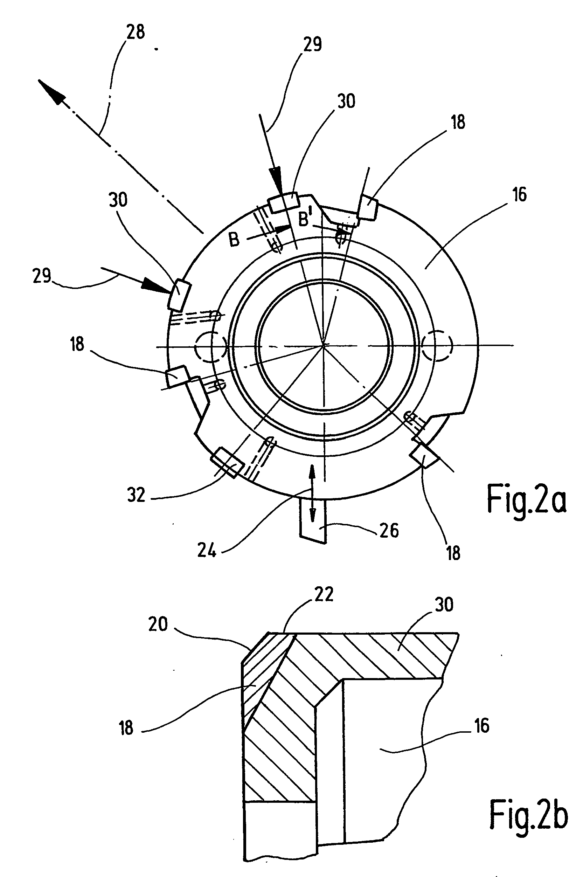

Das Kombinationswerkzeug umfaßt einen Grundkörper 16, an dessen Stimseite mehrere Reibschneiden 18 über den Umfang verteilt angeordnet sind. Die Reibschneiden 18 weisen jeweils einen schrägen Anschnitt 20 als Hauptschneide und einen an diesen anschließenden, den Flugkreisradius definierenden Führungsteil 22 auf. In dem Grundkörper 16 ist im Falle der Fig. 1 und 2 eine mit Hilfe eines Schiebermechanismus 24 radial aussteuer bare Einstechschneide 26 angeordnet, während im Falle der Fig. 3 zwei einander diametral gegenüberliegende, gemeinsam radial aussteuerbare Einstechschneiden 26', 26" vorhanden sind. In beiden Fällen ergibt sich beim Einstechvorgang eine in Umfangsrichtung definiert ausgerichtete Schnittkraftresultierende 28, die über zwei am Grundkörper im Winkelabstand voneinander angeordnete Führungsleisten 30 unter Aufbau der Reaktionskräfte 29 auf die Bohrungswand übertragen wird. Um beim Einstechvorgang eine Spanbildung im Bereich der Reibschneiden 18 zu vermeiden, sind die beiden Führungsleisten 30 zwischen zwei in Umfangsrichtung benachbarten Reibschneiden 18 auf einander gegenüberliegenden Seiten der Schnittkraftresultierenden 28 der mindestens eine Einstechschneide 26 angeordnet. Wie aus der symbolischen Darstellung nach Fig. 2b zu ersehen ist, sind die Reibschneiden 18 und die benachbarten Führungsleisten 30 axial so gegeneinander versetzt, dass beim Reibvorgang zunächst über den Anschnitt 20 und den benachbarten Führungsteil 22 spanbildend gerieben und anschließend über die Führungsleisten 30 abgestützt wird. Die Führungsleisten 30 haben den gleichen Flugkreisradius wie die Reibschneiden 18.

Bei dem in Fig. 1 gezeigten Ausführungsbeispiel ist eine weitere Führungsleiste 32 vorgesehen, die nahe der Einstechschneide 26 angeordnet und im Wesentlichen senkrecht zur Schnittkraftresultierenden 28 in der Bohrung abstützbar ist.

Im Falle des in Fig. 3 gezeigten Ausführungsbeispiels liegen die beiden Einstechschneiden 26', 26" im Grundkörper im Wesentlichen diametral einander gegenüber und sind gleichzeitig ansteuerbar. Die eine Einstechschneide 26' bildet dabei eine Vorstechschneide, während die andere Einstechschneide 26" eine Fertigstechschneide bildet. Die Einstechschneiden 26', 26" werden so ausgebildet, dass sich ihre Schnittkräfte nicht exakt kompensieren, sondern sich eine während des Einstechvorgangs stabile gemeinsame Schnittkraftresultierende 28 ergibt, aufgrund der die optimale Anordnung der Führungsleisten 30 ermittelt werden kann.

Zusammenfassend ist folgendes festzuhalten: Die Erfindung bezieht sich auf ein Kombinationswerkzeug für den Einsatz in Werkzeugmaschinen zur spangebenden Bearbeitung von Werkstücken. Das Kombinationswerkzeug weist einen Grundkörper 16 mit mehreren über den Umfang des Grundkörpers verteilt angeordneten, einen Anschnitt 20 und einen Führungsteil 22 aufweisenden Reibschneiden 18 zum Reiben einer Zylinderbohrung und mit mindestens einer axial gegenüber den Reibschneiden 18 versetzt angeordneten, radial gegenüber dem Grundkörper 16 aussteuerbaren Einstechschneide 26 auf. Erfindungsgemäß ist das Kombinationswerkzeug mit zwei Führungsleisten 30 ausgestattet, die im Winkelabstand voneinander zwischen zwei in Umfangsrichtung benachbarten Reibschneiden 18 im Grundkörper angeordnet und axial gegenüber diesen in Richtung Einstechschneide 26 versetzt sind. Die Führungsleisten weisen den gleichen Flugkreisradius wie die Reibschneiden 18 auf und sind beim Einstechvorgang im Winkelabstand auf einander gegenüberliegenden Seiten der Schnittkraftresultierenden 28 der Einstechschneide 26 innerhalb der Bohrung abstützbar.

## Patentansprüche

1. Kombinationswerkzeug für den Einsatz in Werkzeugmaschinen zur spangebenden Bearbeitung von Werkstücken mit einem Grundkörper (16) mit mehreren über den Umfang des Grundkörpers verteilt angeordneten, einen Anschnitt (20) und einen Führungsteil (22) ausweisenden Reibschneiden (18) zum Reiben einer zylindrischen Bohrung (10), und mit mindestens einer axial gegenüber den Reibschneiden (18) versetzt angeordneten, radial gegenüber dem Grundkörper (16) aussteuerbaren Einstechschneide (26; 26', 26"), **gekennzeichnet durch** zwei Führungsleisten (30) die im Winkelabstand voneinander zwischen zwei in Umfangsrichtung benachbarten Reibschneiden (18) im Grundkörper (16) angeordnet und axial gegenüber diesen in Richtung Einstechschneide (26; 26', 26") versetzt sind, die den gleichen Flugkreisradius wie die Reibschneiden (18) aufweisen und die beim Einstechvorgang im Winkelabstand auf einander gegenüberliegenden Seiten der Schnittkraftresultierenden (28) der mindestens einen Einstechschneide innerhalb der Bohrung (10) abstützbar sind.

2. Kombinationswerkzeug nach Anspruch 1, **gekennzeichnet durch** mindestens eine weitere Führungsleiste (32), die nahe der Einstechschneide (26) angeordnet und im wesentlichen senkrecht zu deren Schnittkraftresultierenden (28) innerhalb der Bohrung (10) abstützbar ist.

3. Kombinationswerkzeug nach Anspruch 1 oder 2, **dadurch gekennzeichnet, dass** zwei im Grundkörper (16) einander im wesentlichen diametral gegenüberliegende, gleichzeitig aussteuerbare Einstechschneiden (26', 26") vorgesehen sind, die eine während des Einstechvorgangs in Umfangsrichtung lagestabile Schnittkraftresultierende (28) aufweisen.

4. Kombinationswerkzeug nach Anspruch 3, **dadurch gekennzeichnet, dass** eine der Einstechschneiden (26') eine Vorstechschneide und die andere Einstechschneide (26") eine Fertigstechschneide bilden.

5. Kombinationswerkzeug nach einem der Ansprüche 1 bis 4, **dadurch gekennzeichnet, dass** zumindest ein Teil der Reibschneiden (18) unterschiedliche Winkelabstände aufweisen und axial gegeneinander versetzt angeordnet sind.

6. Kombinationswerkzeug nach einem der Ansprüche 1 bis 5, **dadurch gekennzeichnet, dass** einander benachbarte Reibschneiden (18) zum Teil unterschiedliche Winkelabstände und einen darauf abgestimmten Axialversatz aufweisen.

7. Kombinationswerkzeug nach Anspruch 6, **dadurch gekennzeichnet, dass** die unterschiedlichen Winkelabstände und der Axialversatz so aufeinander abgestimmt sind, dass beim Reibvorgang mit einem vorgegebenen Vorschub sich eine gleichmäßige Schnittaufteilung an den Reibschneiden (18) ergibt.

8. Verwendung des Kombinationswerkzeugs nach einem der Ansprüche 1 bis 7 zum Reiben und Einstechen der Zylinderbohrungen von Schwimmsattelbremsen.

## Claims

1. A combination tool for use in machine tools for the machining of workpieces comprising a base body (16) with several reaming blades (18) for reaming a cylindrical bore (10), which reaming blades are distributively arranged over the circumference of the base body, and have a chamfer (20) and a guide surface (22), and comprising at least one grooving blade (26; 26', 26") arranged axially displaced with respect to the reaming blades (18), and can be controlled radially with respect to the base body (16), wherein two guide strips (30) are arranged at an angular distance from one another between two circumferentially mutually adjacent reaming blades (18) in the base body (16), are displaced axially with respect to these in direction of the grooving blade (26; 26', 26"), have the same flight-circle radius as the reaming blades (18), and provide support during the grooving operation at an angular distance on opposite sides of the cutting-force resultant (28) of the at least one grooving blade within the bore (10).

2. The combination tool according to Claim 1,
wherein at least one further guide strip (32) is arranged near the grooving blade (26) to provide support essentially perpendicularly with respect to its cutting-force resultant (28) within the bore (10).

3. The combination tool according to Claim 1 or 2,
wherein two grooving blades (26', 26") are provided, which are essentially diametrically opposite one another in the base body (16), and can be simultaneously controlled, and which have a cutting-force resultant (28) which is position-stable in circumferential direction during the grooving operation.

4. The combination tool according to Claim 3,
wherein one of the grooving blades (26') is a piercing blade and the other grooving blade (26") is a finishing grooving blade.

5. The combination tool according to one of the Claims 1 to 4, wherein at least some of the reaming blades (18) have varying angular distances and are arranged axially displaced with respect to one another.

6. The combination tool according to one of the Claims 1 to 5, wherein adjacent reaming blades (18) have in part varying angular distances and an axial displacement adjusted thereto.

7. The combination tool according to Claim 6,
wherein the varying angular distances and the axial displacement are adjusted to one another in such a manner that during the reaming operation with a specified advance there results an even cutting distribution on the reaming blades (18).

8. A use of the combination tool according to one of the Claims 1 to 7 for reaming and radial enlarging of the cylinder bores of floating caliper disk brakes.

## Revendications

1. Outil combiné pour l'utilisation dans des machines-outils, en vue de l'usinage de pièces par enlèvement de matière, présentant un corps de base (16) comprenant plusieurs tranchants d'abrasion (18) disposés avec répartition sur le pourtour dudit corps de base, qui comportent un biseau d'attaque (20) et une partie de guidage (22) en vue de l'abrasion d'un alésage cylindrique (10) ; et au moins un tranchant (26 ; 26', 26") de rectification en plongée qui est agencé avec décalage axial vis-à-vis des tranchants d'abrasion (18), et peut être ajusté radialement par rapport au corps de base (16), **caractérisé par** deux barrettes de guidage (30) qui sont disposées dans le corps de base (16) avec espacement angulaire mutuel, entre deux tranchants d'abrasion (18) voisins dans le sens périphérique, vis-à-vis desquels elles sont axialement décalées en direction du tranchant (26 ; 26', 26") de rectification en plongée, lesquelles barrettes présentent le même rayon de circonférence de révolution que les tranchants d'abrasion (18) et peuvent prendre appui à l'intérieur de l'alésage (10) au cours du processus de rectification en plongée, avec espacement angulaire, sur des côtés mutuellement opposés de la résultante (28) de la force de coupe du tranchant de rectification en plongée prévu au minimum.

2. Outil combiné selon la revendication 1, **caractérisé par** au moins une barrette supplémentaire de guidage (32) disposée à proximité du tranchant (26) de rectification en plongée et pouvant prendre appui, à l'intérieur de l'alésage (10), pour l'essentiel perpendiculairement à la résultante (28) de la force de coupe dudit tranchant.

3. Outil combiné selon la revendication 1 ou 2, **caractérisé par le fait que** le corps de base (16) renferme deux tranchants (26', 26") de rectification en plongée qui sont situés pour l'essentiel diamétralement en vis-à-vis, peuvent être activés simultanément et présentent une résultante (28) de force de coupe occupant une position stable, dans le sens périphérique, au cours du processus de rectification en plongée.

4. Outil combiné selon la revendication 3, **caractérisé par le fait que** l'un (26') des tranchants de rectification en plongée matérialise un tranchant de rectification préalable, et l'autre tranchant (26") de rectification en plongée matérialise un tranchant de rectification de finissage.

5. Outil combiné selon l'une des revendications 1 à 4, **caractérisé par le fait qu'**au moins une partie des tranchants d'abrasion (18) présente des espacements angulaires différents et est disposée avec décalage mutuel dans le sens axial.

6. Outil combiné selon l'une des revendications 1 à 5, **caractérisé par le fait que** des tranchants d'abrasion (18) mutuellement voisins présentent des espacements angulaires en partie différents, et un décalage axial coordonné avec ces derniers.

7. Outil combiné selon la revendication 6, **caractérisé par le fait que** les espacements angulaires différents et le décalage axial sont mutuellement coordonnés de façon telle que le processus d'abrasion, avec avance préétablie, se traduise par une répartition uniforme de la coupe sur les tranchants d'abrasion (18).

8. Utilisation de l'outil combiné selon l'une des revendications 1 à 7, pour l'abrasion et la rectification en plongée des alésages cylindriques de freins à étriers flottants.
